**Europäisches Patentamt**

**European Patent Office**

**Office européen des brevets**

(19)

(11) Numéro de publication: **0 1 1 2 2 1 8**
**B1**

(12)

# FASCICULE DE BREVET EUROPEEN

(45) Date de publication du fascicule du brevet:
**20.11.86**

(21) Numéro de dépôt: **83402278.2**

(22) Date de dépôt: **25.11.83**

(51) Int. Cl.⁴: **G 01 G 23/10,** G 01 R 15/10

(54) **Dispositif électronique de mesure avec filtrage passe-bas accéléré, en particulier pour le pesage.**

(30) Priorité: **02.12.82 FR 8220201**

(43) Date de publication de la demande:
**27.06.84 Bulletin 84/26**

(45) Mention de la délivrance du brevet:
**20.11.86 Bulletin 86/47**

(84) Etats contractants désignés:
**DE GB NL SE**

(56) Documents cités:
**FR - A - 2 171 452**
**FR - A - 2 180 011**
**FR - A - 2 321 698**
**FR - A - 2 323 131**
**GB - A - 1 407 195**
**US - A - 4 120 370**

(73) Titulaire: **TESTUT-AEQUITAS, 8, rue Popincourt,
F-75011 Paris (FR)**

(72) Inventeur: **Langlais, Jacques Fernand, 38 rue des
Ecoles, 91830 Coudray-Montceaux (FR)**
Inventeur: **Brisset, Gilbert Claude, 5 bis, rue de la
Fontaine au Roi, 75011 Paris (FR)**

(74) Mandataire: **Martin, Jean-Jacques et al, Cabinet
REGIMBEAU 26, Avenue Kléber, F-75116 Paris (FR)**

## Description

La présente invention concerne le filtrage passe-bas de signaux analogiques, et s'applique en particulier au pesage avec affichage numérique.

Les filtres passe-bas classiques sont aptes à suivre les variations de la composante continue d'un signal chargé d'oscillations parasites. Mais il leur faut du temps pour cela. Dans les applications comme le pesage, la variation de la composante continue se produit de manière assez brutale. Il arrive, de plus, que s'y superposent des oscillations liées aux mouvements soit du corps à peser-pesage de bébés ou d'animaux-, soit du support de la balance-pesage à bord d'un camion de livraison, par exemple.

De telles oscillations ou vibrations peuvent descendre jusqu'à des fréquences très basses, comme 1 Hertz. Si l'on utilisait un filtre passe-bas classique, coupant de telles fréquences d'oscillations, le temps nécessaire pour que la sortie du filtre atteigne avec une précision suffisante la nouvelle valeur de la composante continue – le signal utile – serait prohibitif.

La présente invention permet de résoudre ce problème, en proposant un nouveau dispositif électronique de mesure avec filtrage passe-bas, applicable en particulier au pesage.

De manière connue (GB-A-1 407 195, Fig. 3), ce dispositif possède, entre des bornes actives d'entrée et de sortie et la masse, un réseau d'éléments résistifs et réactifs agencés en quadripôle filtrant passe-bas.

Selon une caractéristique générale de l'invention, le dispositif comporte aussi:

– une maille à résistance commandée en parallèle sur l'un au moins des éléments résistifs,

– des moyens discriminateurs pour fournir un signal de type créneau consécutivement à une variation de la composante continue du signal présent sur la borne active d'entrée, la durée de ce signal-créneau croissant avec l'amplitude de la variation de la composante continue,

– des moyens de retard pour définir un intervalle de temps neutre, de durée prédéterminée, consécutivement au début du signal-créneau, et

– des moyens de commande de ladite maille à résistance commandée afin de la commuter sur une faible valeur de résistance au terme dudit intervalle de temps neutre, et de la ramener progressivement à une forte valeur de résistance consécutivement à la fin dudit signal-créneau.

Dans un mode de réalisation préférentiel, la maille à résistance commandée comporte un transistor à effet de champ, et les moyens de commande comprennent un circuit à double constante de temps apte à faire conduire le transistor rapidement après la fin de l'intervalle de temps neutre, et à le ramener ensuite à l'état bloqué d'une manière progressive.

Plus particulièrement, les moyens de commande comportent un circuit relié à la borne d'entrée, afin d'appliquer à la grille du transistor une tension de commande de conduction proche de la tension présente sur la borne d'entrée.

En principe, la maille à résistance commandée et le circuit à double constante de temps sont agencés de sorte que la pente de variation de la constante de temps du quadripôle filtrant demeure inférieure à la fréquence minimale à filtrer.

Pour la plupart des applications, la fréquence minimale à filtrer est de l'ordre du Hertz. Dans le cas des pèse-bébé, particulièrement difficile, il est souhaitable qu'une vibration de 1 Hz soit éliminée, ce qui suppose une fréquence minimale (de coupure) encore inférieure.

Dans un mode de réalisation particulier, les moyens discriminateurs comprennent un étage amplificateur d'oscillations à fort gain, au moins en faibles signaux, connecté à la borne d'entrée, un étage comparateur connecté d'une part à la borne d'entrée, et d'autre part à la sortie de l'amplificateur d'oscillations, et un étage différentiateur connecté à la sortie de l'étage comparateur, ledit signal-créneau étant défini à partir de l'absence durable d'impulsions en sortie de l'étage différentiateur.

De leur côté, les moyens de retard comprennent avantageusement un circuit monostable réarmable, connecté à la sortie de l'étage différentiateur, ce circuit monostable réarmable fournissant en sortie le signal en créneau diminué à son début de l'intervalle de temps neutre, de durée prédéterminée.

Pour les applications de pesage, le dispositif est monté entre un circuit capteur de poids et un convertisseur analogique-numérique de pesage.

Les performances obtenues avec le dispositif selon l'invention permettent une évolution fine des techniques de pesage. Cette évolution s'illustre bien dans le cas des pèse-bébé.

A cet effet, le convertisseur analogique-numérique de pesage est suivi d'une logique de commande associée à des mémoires, un clavier et un affichage numérique; la logique réagit à une commande spécifique du clavier en recevant de celui-ci une information d'adresse en mémoire, puis en mettant le poids nouvellement déterminé à cette adresse tout en affichant la différence entre le poids précédemment mis en mémoire et le poids nouvellement déterminé.

Pour les pèse-bébé, cela permet, par pesée avant et après repas, d'obtenir une information fine et significative sur la quantité d'aliments ingérée.

D'autres caractéristiques et avantages de l'invention apparaîtront à l'examen de la description détaillée qui va suivre, ainsi que des dessins annexés, sur lesquels:

fig. 1 illustre le schéma électrique d'un montage classique formant capteur de poids avec filtrage;

fig. 2 illustre le schéma électrique détaillé d'un mode de réalisation du filtre perfectionné selon la présente invention;

fig. 3 illustre des formes de signal prises en différents points de la fig. 2;

fig. 4 illustre le schéma électrique d'une chaîne de conversion analogique-numérique et d'affichage numérique perfectionnée selon la présente invention;

fig. 5, 6A et 6B illustrent les organes d'affichage et le clavier de commande, et

fig. 7 illustre l'organigramme du fonctionnement de la chaîne de la fig. 4.

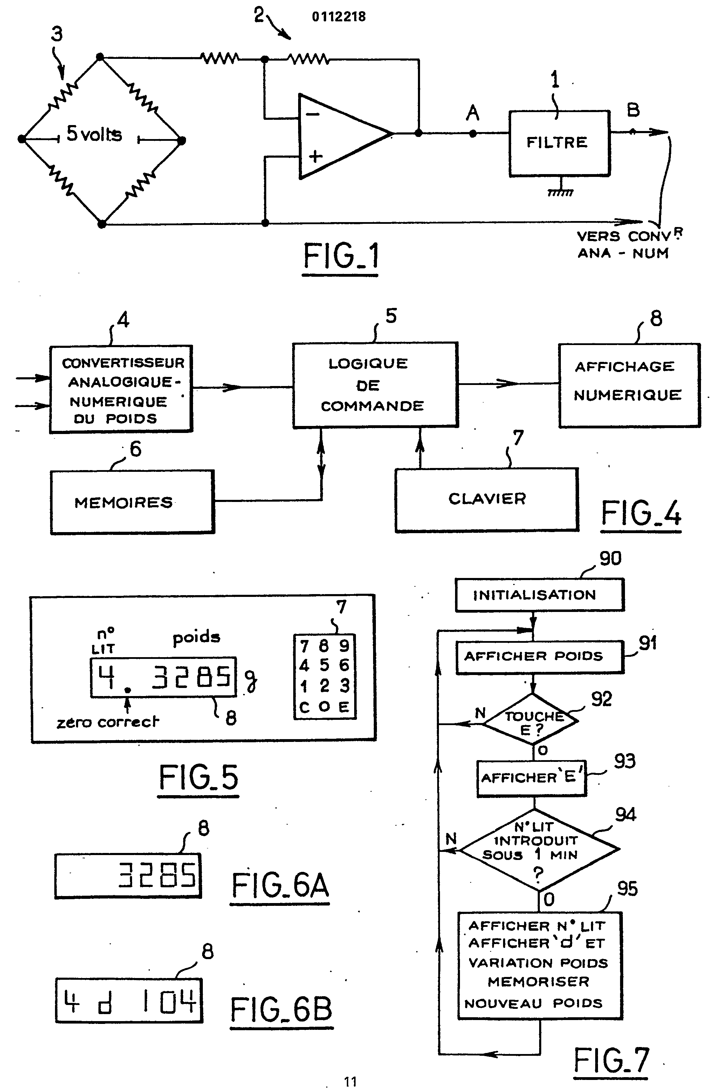

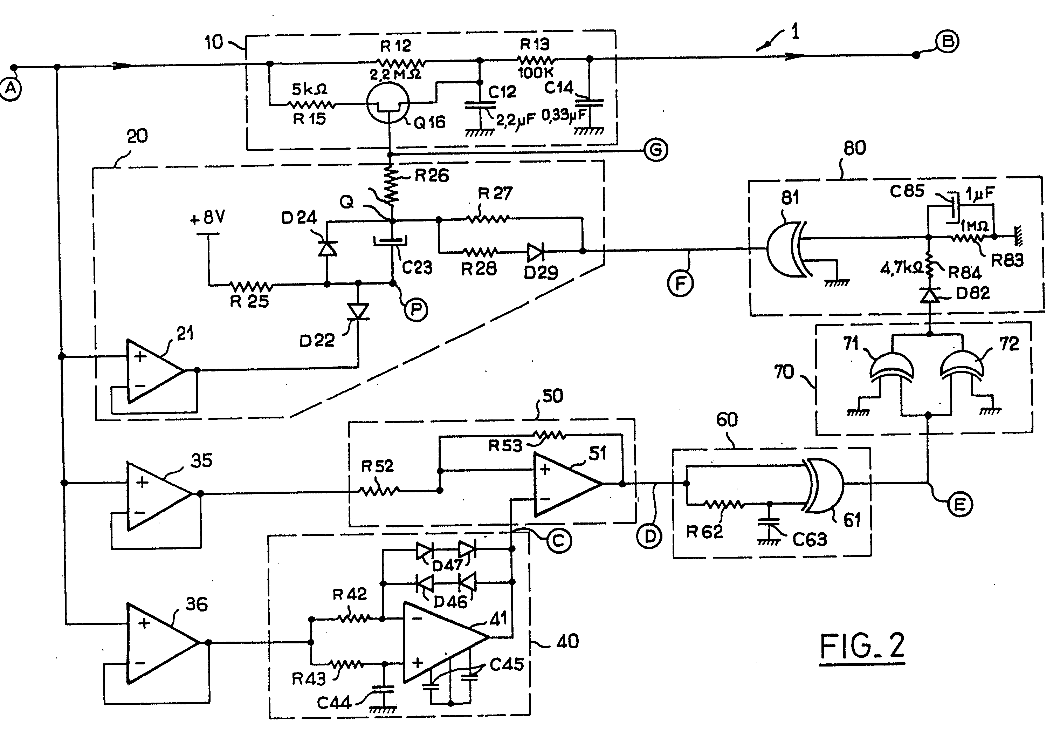

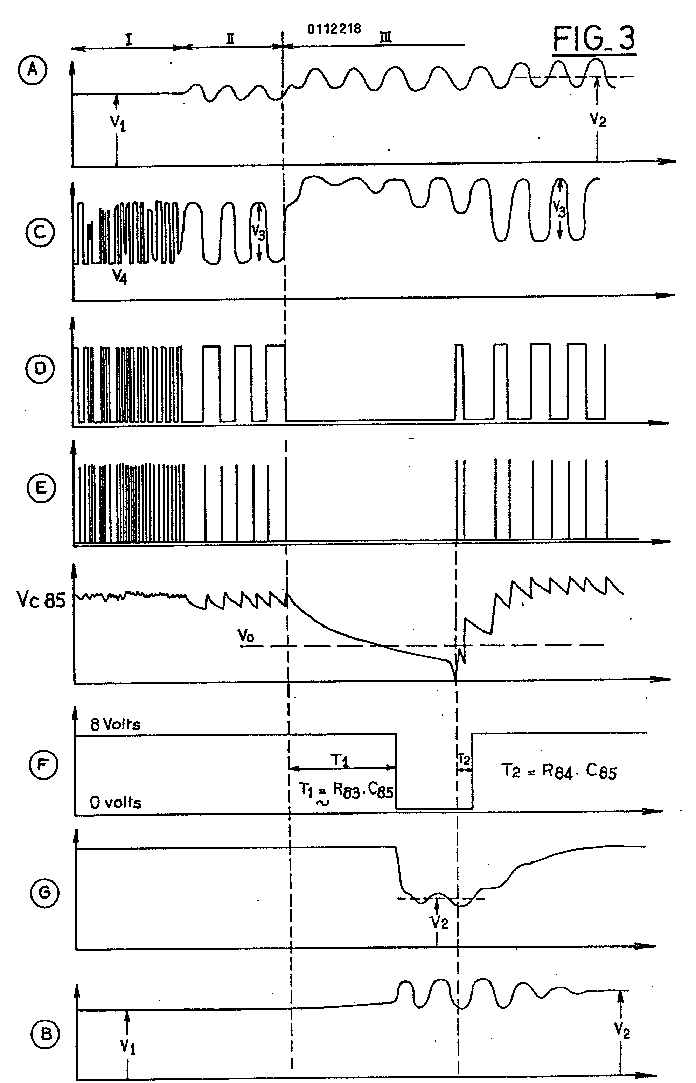

La fig. 1 illustre un montage classique de pesage en vue d'un affichage numérique. Le récepteur de charge (non représenté) possède par exemple la structure en anneau décrite dans la demande de brevet FR 2469701, munie de jauges de contraintes en tant que capteurs. Ces jauges de contraintes sont agencées en un pont 3, suivi d'un étage amplificateur 2, puis d'un filtre 1, dont la sortie est appliquée à un convertisseur analogique-numérique de poids 4 (fig. 4). Les filtres 1 utilisés jusqu'à présent comportent par exemple deux cellules R–C passe-bas en série.

Des difficultés sont rencontrées en présence d'oscillations ou vibrations affectant soit le support de la balance, soit son plateau porte-charge et le corps à peser. Le cas des pèse-bébé est typique: un nouveau-né bouge beaucoup, à des fréquences relativement basses. Avec un filtre classique, le temps nécessaire pour filtrer suffisamment les fréquences tenant à ce mouvement dans le signal de pesage est pratiquement prohibitif.

Pour éviter ce temps d'attente à l'opérateur, il est connu de lui faire commander l'instant de mesure (par le convertisseur analogique-numérique) à l'aide d'un bouton-poussoir. La plupart du temps, la mesure est alors faite prématurément, et par conséquent entachée d'erreur. Enfin, cette erreur n'est pas négligeable, compte-tenu des faibles variations de poids qu'il est souhaitable de détecteur (mesure avant et après tétée, par exemple).

La présente invention vient proposer un filtre électronique perfectionné, que permet d'une manière générale l'obtention accélérée d'un signal de mesure débarrassé d'oscillations. Dans son application en pesage, ce filtre résoud le problème spécifique lié à la présence d'oscillations intempestives ou inéluctables, affectant le support de l'instrument de pesage et/ou le corps à peser.

Ce filtre, illustré sur la fig. 2, va venir remplacer le bloc 1 de la fig. 1, du moins pour les applications de pesage.

Sur la fig. 2, le filtre comporte une borne active d'entrée A, une borne active de sortie B, et bien entendu une masse, qui apparaissent également sur la fig. 1. Entre les bornes A et B et la masse est placé un quadripôle désigné généralement par 10, et constitué de deux éléments RC en série, le premier comprenant la résistance R12 suivie du condensateur C12 en parallèle sur la masse, et le second comprenant la résistance R13 suivie du condensateur C14 également en parallèle sur la masse.

Selon la présente invention, il est prévu une maille à résistance commandée en parallèle sur la résistance R12. Cette maille à résistance commandée se compose ici d'une résistance R15, en série sur la maille source-drain d'un transistor à effet de champ Q16. Dans le mode de réalisation décrit, le transistor Q16 est du type métal-oxyde semiconducteur à grille isolée et à canal P.

A titre d'exemple particulier, dans le cas des pèse-bébé, les valeurs des résistances sont par exemple 2,2 mégohms pour R12, de 100 kilohms pour R13, et de 5 kilohms pour R15. Les valeurs des capacités sont de 2,2 microfarads pour C12, et de 0,33 microfarads pour C14. Enfin, le transistor à effet de champ est par exemple le modèle J271 de la société «Siliconix» ou «National Semi-Conductor».

On voit immédiatement que lorsque le transistor Q16 est bloqué, l'ensemble R12 et C12 correspond à une constante de temps de 4,84 s. A sa suite, l'ensemble R13 et C14 correspond à une constante de temps de 33 ms, assurant ainsi un filtrage complémentaire, notamment en raison des commutations imprimées à la première partie du filtre.

Au contraire, lorsque le transistor Q16 devient conducteur, c'est la résistance R15 qui devient rapidement prédominante, pour aboutir finalement à une constante de temps définie pratiquement par R15 et C12, et correspondant à 11 ms.

La présente invention prévoit en outre une commande particulière de la variation de la constante de temps liée à la maille R15 Q16.

Le signal présent sur la borne active d'entrée A est appliqué à trois étages formant amplificateur-tampon, notés respectivement 21, 35 et 36. Les étages 35 et 36 font partie de moyens discriminateurs, qui incorporent également les blocs 40, 50 et 60 de la fig. 2. Ces moyens discriminateurs sont sensibles au signal présent sur la borne A, pour fournir un signal de type créneau consécutivement à une variation de la composante continue du signal présent sur la borne active d'entrée A. Selon un aspect intéressant de l'invention, la durée de ce signal en créneau croît avec l'amplitude de la variation en question de la composante continue.

Plus précisément, les moyens discriminateurs comportent ici un étage amplificateur d'oscillations à fort gain, au moins dans les faibles signaux, référencé 40. Cet étage 40 est connecté à la borne d'entrée A par l'étage tampon 36. Il est suivi d'un comparateur 50, connecté par ailleurs à la borne d'entrée A à travers l'autre étage tampon 35. Enfin, un étage différentiateur 60 est connecté à la sortie de l'étage comparateur 50. En sortie du différentiateur 60, le signal en créneau précité est défini à partir de l'absence durable d'impulsions.

On décrira maintenant plus en détail les éléments des blocs 40, 50 et 60 en référence à la fig. 2 ainsi qu'au diagramme de signaux de la fig. 3.

La ligne A de la fig. 3 représente un signal d'entrée supposé appliqué à la borne A. Pour bien faire apparaître les performances du filtre selon l'invention, ce signal se compose d'une première partie I, constituée d'une tension rigoureusement constante de valeur $V_1$ et débarrassée d'oscillations. Ensuite, dans une partie II, une oscillation de basse fréquence est superposée au signal continu $V_1$. Dans la partie III, la composante continue en valeur moyenne du signal augmente, pour passer à une valeur $V_2$, tout en continuant à être animée de sur-oscillations.

Sur la fig. 2, le bloc 40 est constitué d'un amplificateur différentiel hacheur à très haute impédance d'entrée, noté 41. Cet amplificateur est par exemple le modèle ICL 7650CPD, vendu par la société «Intersil». Cet amplificateur possède normalement un gain en boucle ouverte de l'ordre de $10^6$, et une impédance d'entrée de l'ordre de $10^{10}$ ohms. De manière connue, il est muni de deux capacités auxiliaires notées C45 sur la fig. 2.

L'entrée non inverseuse de l'amplificateur 41 est reliée à la borne A par l'intermédiaire de l'étage tampon 36, à travers une résistance série R43, valant par exemple 2,2 mégohms, et suivie d'une capacité parallèle C44, valant par exemple 330 nanofarads. On observera que cela correspond à une constante de temps d'environ 0,73 s.

L'entrée inverseuse de l'amplificateur 41 est reliée à la sortie de l'étage 36 par une résistance R42 mesurant par exemple 4,7 kilohms. Cette même entrée inverseuse est reliée à la sortie de l'amplificateur 41 par une contre-réaction non linéaire à diodes, comprenant deux diodes D46 en série dans un sens, et deux diodes D47 en série dans l'autre sens. Ces diodes sont de préférence des diodes au silicium tel que le modèle 1N4148.

L'étage 40 ainsi monté présente la propriété d'avoir un gain pratiquement unité pour les signaux d'entrée continus. En effet, l'impédance de l'entrée non inverseuse aussi bien que de l'entrée inverseuse est très grande même par rapport à la résistance interne des diodes D46 et D47. De plus, le courant qui traversera les résistances R42 et R43 de même que les diodes D46 et D47 sera également très faible compte tenu de l'impédance d'entrée de l'amplificateur 41. En courant continu, les deux entrées de l'amplificateur étant au même potentiel la sortie suit les entrées.

Dès que le signal d'entrée atteint des fréquences dépassant le seuil qui correspond à la constante de temps de 0,73 s associée au groupe R43 C44, les choses se passent différemment. On notera que cette fréquence de seuil est de l'ordre de 0,2 Hertz, sous réserve des effets dus au grand gain de l'amplificateur, à sa contreréaction linéaire, et aux autres résistances intervenant.

Lorsqu'on approche de cette fréquence de seuil, il se produit d'une part un déphasage et d'autre part une atténuation de l'entrée non inverseuse de l'amplificateur 41 par rapport à son entrée inverseuse. Très rapidement, le gain de l'amplificateur intervient, ce qui fait changer d'état sa sortie. Les diodes D46 et D47 empêchent le passage de ladite sortie en saturation, et limitent la différence de tension entre la sortie et l'entrée inverseuse à $\pm$ 1,2 V. Compte-tenu du gain de $10^6$ de l'amplificateur 41 en boucle ouverte, cela correspond à une différence de tension de 1,2 $\mu$V entre les deux entrées de cet amplificateur. Ce qui précède est valable pour les faibles amplitudes de signaux dépassant la fréquence de coupure. Lorsque l'amplitude du signal devient forte, la contre-réaction produite par les diodes D46 et D47 augmente, d'où il résulte une diminution rapide du gain de l'étage amplificateur.

On examinera maintenant la ligne C de la fig. 3. Pendant la partie I du signal A, l'entrée de l'amplificateur 41 ne voit que des bruits de fréquence élevée (non représentés sur la ligne A). De fréquence assez élevée, ce bruit est fortement amplifié, pour donner une amplitude crête à crête de 2,4 V, au-dessus d'un seuil minimum de tension égal à $V_4$. Dans la partie II du signal A, la sortie de l'amplificateur 41 est un signal à la même fréquence que l'oscillation, mais fortement amplifiée, c'est-à-dire qu'il présente des fronts de montée et de descente très nets, suivis de paliers arrondis compte tenu de la chute du gain de l'amplificateur 41 lorsque sa tension de sortie atteint les seuils définis par les diodes D46 et D47. L'amplitude crête à crête notée $V_3$ est là encore égale à environ 2,4 V. La valeur moyenne de ce signal est la même que pendant la phase I.

Au début de la phase III du signal A, la valeur de la composante continue de ce signal augmente, passant de $V_1$ à $V_2$. On a déjà indiqué que l'étage amplificateur 40 possède un gain unité pour des tensions continues. En conséquence, la valeur de la tension monte sur le diagramme C de la fig. 3, pour reprendre progressivement des oscillations d'amplitude croissante, qui finiront par atteindre en partie droite la même amplitude crête à crête $V_3$ que précédemment. La réapparition progressive des oscillations tient à l'effet combiné de la contre-réaction non linéaire à seuil des diodes D46 et D47 sur l'amplificateur, et du réseau RC présent sur son entrée non inverseuse. On remarque que le retour des oscillations à leur amplitude crête à crête $V_3$ prendra d'autant plus de temps que la variation de la composante continue du signal présent sur l'entrée A est plus importante.

L'étage amplificateur d'oscillations à fort gain 40 est suivi d'un étage comparateur 50, la sortie de l'amplificateur 41 étant reliée à l'entrée inverseuse du comparateur 51. L'entrée non inverseuse de ce même comparateur est reliée d'une part à la sortie de l'étage tampon 35 par une résistance R52, et d'autre part à la sortie du comparateur 51 par une résistance R53. La résistance R53 est nettement plus grande que la résistance R52, typiquement d'un facteur 500 environ, ce qui donne à ce comparateur 51 un fonctionnement à faible hystérésis.

L'étage comparateur 50 va donc comparer le signal d'entrée A au signal au point C, représentés sur les deux premiers diagrammes de la fig. 3. Pendant la phase I, l'amplitude crête à crête en sortie au point C est importante, ce qui va produire un passage alterné très rapide de la sortie de l'étage comparateur 50 entre ces deux tensions extrêmes. Cela se fait à la fréquence du bruit donc à une fréquence très grande. Ensuite, pendant la phase II, les choses se passent de même, mais à la fréquence des oscillations surimposées à la composante continue du signal A. On obtient donc un signal rectangulaire. Au début de la phase III, le signal au point C demeure en permanence supérieur au signal d'entrée A. Comme le signal au point C est appliqué sur l'entrée inverseuse du comparateur 51, celui-ci demeure en permanence avec une sortie au niveau bas. Au bout d'un certain temps, lié à la vitesse de réapparition des oscillations au point C, le signal au point A devient à nouveau supérieur par moments au signal au point C. Cela commence, dans l'exemple représenté où la composante continue a augmenté, par un dépassement qui s'effectue sur les alternances négatives du signal A. On voit donc apparaître au point D, comme le montre le troisième diagramme de la fig. 3, des impulsions qui apparaissent à chaque alternance négative du signal A, et ont une durée progressivement croissante jusqu'à atteindre tout la durée de l'alternance négative. Le régime permanent que l'on atteint ensuite est le même que ce qui existait au point D pendant la phase II.

Le signal D est ensuite appliqué à un étage différentiateur 60, connecté à la sortie de l'étage comparateur 50.

Dans le mode de réalisation représenté, l'étage différentiateur 60 est constitué à partir d'une porte OU EXCLUSIF 61, dont une entrée reçoit directement la sortie de l'étage 50, tandis que l'autre reçoit la même sortie à travers un réseau RC constitué de la résistance série R62 et du condensateur C63 en parallèle vers la masse. Ce réseau RC va produire un déphasage entre les deux entrées de la porte 61. En conséquence, toute transition rapide apparaissant dans le signal D va se traduire par l'apparition d'une impulsion sur le signal E disponible en sortie de la porte 61. Ce signal E est illustré sur le diagramme E de la fig. 3. Il comporte de multiples impulsions rapprochées en regard de la partie I du signal A. En regard de la partie II, il comporte des impulsions sensiblement au niveau de chaque passage par zéro du signal A. Au début de la partie III, aucune impulsion n'apparaît. Les impulsions réapparaissent lorsque le signal D réapparaît lui aussi. Ces impulsions sont au début deux impulsions rapprochées, séparées d'un intervalle de temps un peu plus large des deux impulsions rapprochées suivantes. Et au fur et à mesure que l'on recouvre le régime stationnaire avec une amplitude crête à crête V3 dans le signal C, les impulsions du signal E deviennent à nouveau régulièrement réparties dans le temps.

Le signal-créneau précédemment mentionné est défini à partir de l'absence durable d'impulsions dans le signal E, c'est-à-dire en sortie de l'étage différentiateur. On a observé précédemment que le retour du signal C à son amplitude crête à crête normale V3 est d'autant plus long que la variation de la composante continue du signal A est plus importante. Corrélativement, la durée du signal-créneau présent dans le signal E est elle aussi d'autant plus longue que la variation de la composante continue est plus importante.

Le signal E est appliqué à un étage amplificateur intermédiaire 70, constitué ici de deux portes OU EXCLUSIF 71 et 72 branchées en parallèle. L'une des entrées de chaque porte reçoit le signal E, l'autre recevant la masse. L'homme de l'art comprendra que la sortie de l'étage 70 reproduit la forme du signal E, mais avec une énergie plus grande.

Après cet étage amplificateur 70, le signal E se trouve donc appliqué au circuit monostable réarmable 80. Dans le mode de réalisation représenté, ce circuit monostable réarmable est fondé sur un condensateur C85, monté en parallèle sur une résistance R83, l'une des bornes de cet ensemble étant reliée à la masse. La borne opposée du même ensemble est reliée par une résistance R84 à la cathode d'une diode D82 dont l'anode reçoit la sortie de l'étage 70. Enfin, le point chaud commun à la capacité C85 et aux résistances R83 et R84 est relié à une entrée d'une porte OU EXCLUSIF 81 dont l'autre entrée est reliée à la masse. La capacité du condensateur C85 est par exemple égale à 1 microfarad, tandis que les valeurs des résistances R83 et R84 sont très différentes, la résistance R84 valant par exemple 4,7 kilohms, tandis que la résistance R84 vaut 1 mégohm. Il en résulte que la sortie de l'étage 70 va charger le condensateur C85 avec une constante de temps rapide, dépendant essentiellement de la résistance R84, alors que ce même condensateur va se décharger avec une constante de temps lente, dépendant essentiellement de la résistance R83.

Les impulsions rapprochées des phases I et II du signal A vont donc se traduire par une charge répétée du condensateur C85, d'où le fonctionnement de celui-ci en étage monostable réarmable. En revanche, lorsque ces impulsions disparaissent au début de la phase III, le condensateur C85 va se décharger lentement, comme le montre le diagramme VC85 de la fig. 3. Lorsque la tension aux bornes du condensateur atteint la valeur de basculement $V_0$ de la porte 81, le signal F disponible en sortie de cette porte change d'état en passant d'un niveau élevé à un niveau bas.

Cela se produit au bout d'un intervalle de temps $T_1$ qui est lié essentiellement à la constante de temps R83×C85. On voit bien que le circuit monostable réarmable 80 définit un intervalle de temps neutre, de durée prédéterminée $T_1$, consécutivement au début du signal-créneau.

A la fin du signal-créneau, ou peu après celle-ci, le signal au point F va retourner à sa valeur maximum. En effet, la première impulsion qui réapparaît dans le signal E est la plupart du temps insuffisante pour recharger assez le condensateur C85 de manière à dépasser de façon détectable la tension $V_0$, et à faire basculer la porte 81. En revanche, cela se produira au niveau de la deuxième impulsion, ou éventuellement au niveau d'une impulsion suivante. Le diagramme F de la fig. 3 admet que ce basculement se produit au niveau de la deuxième impulsion, donc avec un retard $T_2$ par rapport à la première impulsion et à la fin du signal-créneau. Ce retard est lié principalement à la valeur de la constante de temps définie par le produit R84×C85.

Selon un aspect particulier de la présente invention, la durée de l'intervalle de temps neutre est choisie au moins égale à la valeur de la demi-période correspondant à la fréquence la plus basse que l'on désire filtrer. Par exemple, si la fréquence limite à filtrer est de 1 Hz, la durée de l'intervalle de temps neutre est au moins égale à 0,5 s.

L'intervalle de temps $T_2$ n'est pas critique, il peut être cependant avantageusement aussi court que possible. Une façon de faire consiste à utiliser un circuit intégré formant monostable réarmable, plutôt que la réalisation détaillée de l'étage 80 telle qu'elle apparaît sur la fig. 2.

Pendant l'intervalle de temps neutre de durée $T_1$, la variation de la composante continue intervenant dans le signal A au début de la phase III va donc avoir le temps de s'établir complètement. Cette composante continue restera donc sensiblement stationnaire dans la suite.

On observera encore que le signal F est constitué par la sortie d'une porte logique, et varie donc entre une valeur supérieure d'environ 8 V et une valeur inférieure proche de 0 V.

Le signal F disponible en sortie de l'étage monostable 80 est appliqué d'une part à la cathode d'une diode D29 dont l'anode est reliée à une résistance R28, qui à son tour est reliée au point Q. Le point F est également relié directement au point Q à travers une résistance R27 de valeur nettement supérieure à celle de R28. Par exemple, la résistance R27 vaut 270 kilohms, tandis que la résistance R28 vaut 12 kilohms. Le point Q est relié par une résistance R26 mesurant par exemple 47 kilohms à la grille du transistor à effet du champ Q16. Le même point Q est relié d'une part à l'armature positive d'un condensateur électrochimique C23 dont l'armature négative est reliée par une résistance R25 à la tension de +8 V constituant l'alimentation. Le point Q est relié d'autre part à la cathode d'une diode D24 dont l'anode est reliée elle aussi au point P formant le point commun entre le pôle négatif du condensateur C23 et la résistance R25. Enfin, ce même point P est relié à l'anode d'une diode D22 dont la cathode va vers la sortie de l'étage amplificateur tampon 21 déjà mentionné, qui possède un gain 1 et dont l'entrée non inverseuse est comme pour les autres amplificateurs tampons reliée au point A.

Pendant les phases I et II du signal au point A, le signal F est en régime stationnaire à la valeur de +8 V. Cette tension est reportée au point Q à travers la résistance R27. Elle apparaît donc sur l'armature positive du condensateur C23. Le point P, ou armature négative du condensateur C23, suit la tension présente au point A, augmentée de la valeur de la tension de seuil de la diode D22, soit environ 0,6 V, s'agissant d'une diode au silicium. Le condensateur C23 est donc chargé sensiblement suivant la différence entre la tension présente au point F et la tension présente au point A (sauf les 0,6 V de la diode D22, et le fait que le signal au point F est légèrement inférieur à 8 V). Cette tension au point Q se trouve donc appliquée à la grille isolée du transistor Q16, qui est bloqué et présente donc une très forte impédance entre la résistance R15 et le point commun de la résistance R12 et du condensateur C12.

Les propriétés de filtrage du quadripôle 10 sont alors uniquement définies par la résistance R12 et le condensateur C12 pour sa première section, et par la résistance R13 et le condensateur C14 pour sa deuxième section. Compte tenu des valeurs numériques précédemment données, c'est le réseau R12 C12 qui prédomine, et définit une constante de temps de l'ordre de 5 s (le produit vaut exactement 4,84 s). Le diagramme G de la fig. 3 illustre que pendant l'intervalle de temps $T_1$, pour lequel le signal F demeure à environ +8 V, au début de la phase III, le transistor Q16 demeure bloqué. Dans ces conditions, le signal B qui représente la sortie du quadripôle filtrant va augmenter très légèrement, commençant à suivre la variation de la composante continue du signal A, mais avec une très grande «inertie».

Au terme de l'intervalle de temps $T_1$, le signal F change d'état, passant brutalement à une valeur proche de zéro. Le condensateur C23 de l'étage 20 se décharge alors brutalement à travers la résistance R28 et la diode D29. Très rapidement, le transistor Q16 devient conducteur, et c'est alors la résistance R15 qui définit avec le condensateur C12 la constante de temps du quadripôle 1 dans sa première section. Comme précédemment indiqué, cette constante de temps est de 11 ms. Des oscillations apparaissent immédiatement en sortie sur le signal B. Ces oscillations acquièrent rapidement une amplitude et une valeur moyenne conformes à celles du signal A. Cet état de choses dure jusqu'à ce que le signal F remonte à +8 V.

On observera au passage que pendant le niveau bas du signal F, la tension au point G, sur la grille du transistor Q16, est maintenue, dans sa composante continue, très proche de la tension au point A. En effet, la tension au point G est définie par la fin de la décharge du condensateur C23, à travers la résistance R28 et la diode D29. Cependant, la tension de +8 V est appliquée à travers la résistance R25, pour venir maintenant dans le sens conducteur à travers la diode D24. Si l'on se rappelle que la tension au point P est égale à la tension au point A moins le seuil de 0,6 V de la diode D22, il apparaît immédiatement que la tension au point Q serait égale à la tension au point P plus la même tension de seuil de 0,6 V provoquée par la diode D24. En conséquence, il apparaît que la tension existant au point Q suit fidèlement la tension au point A du moins dans sa composante continue. Comme le montre le signal G en regard de la partie basse du signal F, des variations alternatives de faible amplitude apparaissent également. Cette caractéristique, quoi que non strictement nécessaire, s'est avérée très intéressante pour le bon fonctionnement du dispositif de la présente invention, du moins avec un transistor à effet de champ du type utilisé ici.

On se replace maintenant au point où le signal F retourne à +8 V. La diode D29 est naturellement bloquée. Et la recharge du condensateur C23 va se produire à travers la résistance R27. Cette résistance étant la plus importante au niveau de l'étage 20, c'est essentiellement le produit de la valeur de la résistance R27 par la capacité du condensateur C23 qui va définir la constante de temps de recharge de ce dernier. Typiquement, cette constante de temps est de l'ordre de 3 s (le produit R27·C23 s'élève exactement à 2,7 s). La tension au point G va donc remonter très progressivement jusqu'à la valeur de +8 V. Il en résulte un retour progressif du transistor Q16 à l'état bloqué, et par conséquent une transition des propriétés de filtrage du quadripôle 10 entre la constante de temps R15×C12 et la constante de temps beaucoup plus importante R12×C12. Comme précédemment indiqué, la constante de temps R27×C23 est choisie, compte tenu de la caractéristique de réponse du transistor Q16, de sorte que la pente de variation de la constante de temps du quadripôle filtrant demeure inférieure à la fréquence minimale à filtrer.

De cette augmentation de la constante de temps, il résulte selon le diagramme B de la fig. 3 une atténuation rapide des oscillations présentes sur le signal B, qui atteint alors rapidement la valeur $V_2$ correspondant à la nouvelle valeur de la composante continue du signal d'entrée A, au niveau de la phase III.

Des essais ont été effectués avec un instrument de pesage possédant 2000 points de mesure pour une portée maximale de 10 kg, c'est-à-dire une résolution de 5 g à l'affichage numérique. Le plateau de la balance a été soumis à une vibration à la fréquence de 1 Hz, avec une amplitude de ± 100 échelons, soit ± 500 g. Un poids de valeur connue a été ensuite placé sur le plateau. La valeur exacte de ce poids a été obtenue en 7 s.

A titre comparatif, la même constante de temps de régime permanent, sans filtrage selon la présente invention serait obtenue en enlevant la résistance R15 et le transistor Q16, c'est-à-dire à partir de la constante de temps définie par R12 et C12, qui est de 4,84 s. Pour obtenir à coup sûr une atténuation suffisante compte tenu des 2000 points de mesure, il faut attendre au moins 7,6 fois cette constante de temps. Cela conduit à un temps d'attente proche de 40 s. Comme précédemment indiqué, une telle attente est généralement trop longue pour l'opérateur, ce qui a conduit dans certains cas à prévoir un bouton-poussoir pour commander la mesure de façon anticipée, d'où il résulte que cette mesure est entachée d'une erreur non négligable.

La chaîne de mesure selon la présente invention est obtenue de la manière suivante: on remplace le filtre 1 de la fig. 1 par le filtre selon l'invention illustré sur la fig. 2, et la sortie de ce filtre est appliquée au convertisseur analogique-numérique de poids 4 de la fig. 4. La grande précision obtenue, dans un temps raisonnable, permet d'envisager des mesures différentielles faibles. A cet effet, au lieu d'être relié directement à l'affichage numérique 8, le convertisseur 4 est relié à une logique de commande, interconnectée de son côté avec des mémoires 6 et un clavier 7, et pilotant l'affichage numérique 8.

Le clavier 7 et l'affichage numérique 8 sont illustrés sur la fig. 5, qui représente par exemple la face avant d'un pèse-bébé. Le clavier 7 comprend les chiffres numériques classiques, plus une commande C permettant une correction, et un retour à l'affichage du poids, et une touche E permettant l'enregistrement du poids. L'affichage numérique 8 comporte à droite 4 chiffres significatifs pour l'affichage du poids de 0 à 10 kg par tranche de 5 g. De manière connue, un point décimal indique que le zéro de pesage est correct. A gauche de ce point décimal, il est prévu une zone d'affichage supplémentaire qui permet d'afficher une information d'adresse telle qu'un numéro de lit, cette information étant introduite au niveau du clavier 7 de la manière décrite plus loin.

La logique de commande 5 sera maintenant décrite en référence à l'algorithme de la fig. 7. Après la première étape d'initialisation 90, le régime normal consiste à afficher le poids à l'étape 91. L'affichage présente alors la forme de la fig. 6A, dans l'hypothèse d'un poids de 3285 g. Ensuite, le test 92 examine si l'opérateur a actionné la touche E. Si non, on continue à afficher le poids. Si oui, on passe à l'affichage de E au niveau de l'emplacement d'adresse sur l'affichage 8. La logique est alors en attente de l'introduction du numéro de lit, ou de l'adresse, par l'opérateur à l'aide du clavier 7. On suppose ici que l'opérateur introduit le numéro de lit ou adresse 4. Si aucun numéro de lit n'est introduit, la logique peut rester en attente, ou de préférence retourner à l'affichage du poids en 91, au bout d'un temps prédéterminé égal par exemple à une minute. Si un numéro de lit est introduit, l'étape 95 consiste alors à afficher le numéro de lit au niveau de l'affichage (fig. 6B). L'affichage est complété par la lettre «d», indiquant que le reste de l'affichage va être une différence de poids. La logique de commande 5 effectue alors la différence entre le nouveau poids et l'ancien poids disponible dans la mémoire 6 à l'adresse 4. On suppose ici que cette différence est égale à 104 g, et elle est donc affichée comme le montre a fig. 6B. En même temps, la logique de commande substitue dans la mémoire 6, et à l'adresse 4, la nouvelle valeur de poids soit 3285 g. On retourne ensuite au régime normal qui est l'affichage du poids en 91.

Cette disposition est très intéressante notamment pour la surveillance des bébés en hôpital. Un ou plusieurs bébés sont pesés avant la tétée, leur poids étant mémorisé dans l'appareil. Une seconde pesée faite après leur alimentation permet à la balance de calculer par différence l'accroissement de poids du bébé. Dix mémoires par exemple sont prévus, portant les numéros 0 à 9, ce nombre n'étant naturellement pas limitatif.

La description détaillée qui précède montre que la présente invention s'applique particulièrement bien au cas des pèse-bébé, mais elle n'est pas limitée à cette application, et peut également servir au pesage d'animaux, ainsi qu'à tout autre pesage où le plateau se trouve animé d'oscillations parasites. Inversement, l'invention peut également servir lorsque c'est non pas le plateau mais le support de la balance qui est animé d'oscillations, comme c'est le cas par exemple lors d'un pesage en camion de livraison.

Bien entendu, la présente invention n'est pas limitée au mode de réalisation décrit, mais s'étend à toute variante incluse dans le cadre des revendications ci-après. On pourra en particulier remplacer les circuits 10, 20, 40, 50, 60, 70 et 80 par tous moyens équivalents.

**Revendications**

1. Dispositif électronique de mesure avec filtrage passe-bas, en particulier pour le pesage, comportant entre des bornes actives d'entrée (A) et de sortie (B) et la masse, en réseau (10) d'éléments résistifs (R12, R13) et réactifs (C12, C14) agencés en quadripôle filtrant passe-bas, caractérisé par le fait qu'il comporte:
   – une maille à résistance commandée (R15, Q16) en parallèle sur l'un ou moins des éléments résistifs (R12),
   – des moyens discriminateurs (35, 36, 40, 50, 60) pour fournir un signal du type créneau consécutivement à une variation de la composante continue du signal présent sur la borne active d'entrée (A), la durée de ce signal-crénau croissant avec l'amplitude de la variation de la composante continue,
   – des moyens de retard (70, 80) pour définir un intervalle de temps neutre, de durée prédéterminée, consécutivement au début du signal-créneau, et
   – des moyens de commande (20) de ladite maille à résistance commandée (R15, Q16) afin de la commuter sur une faible valeur de résistance au terme dudit intervalle de temps neutre, et de la ramener progressivement à une forte valeur de résistance consécutivement à la fin dudit signal-créneau.

2. Dispositif selon la revendication 1, caractérisé par le fait que la maille à résistance commandée comporte un transistor à effet de champ (Q16), et que les moyens de commande (20) comprennent un circuit à double constante de temps (C23, R25, R26, R27, R28, D29) apte à faire conduire le transistor (Q16) rapidement après la fin de l'intervalle de temps neutre, et à le ramener ensuite à l'état bloqué d'une manière progressive.

3. Dispositif selon la revendication 2, caractérisé par le fait que les moyens de commande (20) comportent un circuit (21, D22, D24) relié à la borne d'entrée (A), afin d'appliquer à la grille du transistor (Q16) une tension de commande de conduction proche de la tension présente sur la borne d'entrée (A).

4. Dispositif selon l'une des revendications 2 et 3, caractérisé par le fait que la maille à résistance commandée (R15, Q16) et le circuit à double constante de temps (C23, R25, R27) sont agencés de sorte que la pente de variation de la constante de temps du quadripôle filtrant demeure inférieure à la fréquence minimale à filtrer.

5. Dispositif selon l'une des revendications 1 à 4, caractérisé par le fait que la fréquence minimale à filtrer est de l'ordre du Hertz.

6. Dispositif selon l'une des revendications 1 à 5, caractérisé par le fait que les moyens discriminateurs comprennent un étage amplificateur d'oscillations à fort gain, au moins en faibles signaux (40), connecté (36) à la borne d'entrée (A), un étage comparateur (50) connecté d'une part (35) à la borne d'entrée (A), et d'autre part à la sortie de l'amplificateur d'oscillations (40), et un étage différentiateur (60) connecté à la sortie de l'étage comparateur (50), ledit signal-créneau étant défini à partir de l'absence durable d'impulsions en sortie de l'étage différentiateur.

7. Dispositif selon la revendication 6, caractérisé par le fait que les moyens de retard comprennent un circuit monostable réarmable (80), connecté (70) à la sortie de l'étage différentiateur (60), ce circuit monostable réarmable fournissant en sortie le signal en créneau diminué à son début de l'intervalle de temps neutre, de durée prédéterminée.

8. Dispositif selon l'une des revendications 6 et 7, caractérisé par le fait que l'étage amplificateur d'oscillations (40) comprend un amplificateur différentiel hacheur à très haute impédance d'entrée (41), dont l'entrée non-inverseuse est reliée à la masse par un condensateur (C44) et à la borne d'entrée (A, 36) par une résistance (R43), et dont l'entrée inverseuse est reliée d'une part à la borne d'entrée (A, 36) par une résistance (R42), et d'autre part à la sortie par une contre-réaction anti-saturation bidirectionnelle à diodes (D46, D47).

9. Dispositif selon l'une des revendications 1 à 8, caractérisé par le fait qu'il est monté entre un circuit capteur de poids (3, 2) et un convertisseur analogique-numérique de pesage (4).

10. Dispositif selon la revendication 9, caractérisé par le fait que le convertisseur analogique numérique de pesage (4) est suivi d'une logique de commande (5) associée à des mémoires (6), un clavier (7) et un affichage numérique (8), et que la logique (5) réagit à une commande spécifique (E) du clavier en recevant de celui-ci une information d'adresse en mémoire, puis en mettant le poids nouvellement déterminé à cette adresse tout en affichant la différence entre le poids précédemment mis en mémoire et le poids nouvelle déterminé.

**Patentansprüche**

1. Elektronische Messschaltung mit Tiefpassfilterung, insbesondere zum Wiegen, enthaltend zwischen aktiven Eingangs- und Ausgangsklemmen (A, B) und Masse ein Netzwerk (10) aus Widerstandselementen (R12, R13) und Reaktanzelementen (C12, C14), die als Tiefpassfiltervierpol geschaltet sind, dadurch gekennzeichnet, dass sie enthält:
   – eine gesteuerte Widerstandsschleife (R15, Q16), die wenigstens einem der Widerstandselemente (R12) parallelliegt,
   – Diskriminatoreinrichtungen (35, 36, 40, 50, 60) zum Abgeben eines Rechteckimpulssignals als Folge einer Veränderung der Gleichkomponente des an der aktiven Eingangsklemme (A) vorhandenen Signals, wobei die Dauer dieses Rechtecksignals mit der Amplitude der Änderung der Gleichkomponente zunimmt,

– Verzögerungseinrichtungen (70, 80) zum Festlegen eines neutralen Zeitintervalls vorbestimmter Länge in Abhängigkeit vom Beginn des Rechtecksignals, und

– Steuerungseinrichtungen (20) für die genannte gesteuerte Widerstandsschleife (R15, Q16), um den Widerstandswert am Ende des neutralen Zeitintervalls auf einen kleinen Wert umzuschalten und um ihn allmählich wieder auf einen grossen Widerstandswert im Anschluss an das Ende des genannten Rechtecksignals zu bringen.

2. Schaltung nach Anspruch 1, gekennzeichnet durch die Tatsache, dass die gesteuerte Widerstandsschleife einen Feldeffekttransistor (Q16) enthält und dass die Steuerungseinrichtungen (20) einen Schaltkreis mit doppelter Zeitkonstante (C23, R25, R26, R27, R28, D29) enthalten, der dazu eingerichtet ist, den Transistor (Q16) nach dem Ende des neutralen Zeitintervalls schnell leitfähig zu machen und ihn anschliessend wieder allmählich in den Sperrzustand zu bringen.

3. Schaltung nach Anspruch 2, gekennzeichnet durch die Tatsache, dass die Steuerungseinrichtungen (20) einen Schaltkreis (21, D22, D24) enthalten, der mit der Eingangsklemme (A) verbunden ist, um an die Basis des Transistors (Q16) eine Leitungssteuerspannung zu legen, die dicht bei der Spannung liegt, die an der Eingangsklemme (A) herrscht.

4. Schaltung nach einem der Ansprüche 2 und 3, gekennzeichnet durch die Tatsache, dass die gesteuerte Widerstandsschleife (R15, Q16) und die Schaltung doppelter Zeitkonstante (C23, R25, R27) derart angesteuert sind, dass der Abfall der Änderung der Zeitkonstante des Filtervierpols unterhalb der zu filternden Minimalfrequenz liegt.

5. Schaltung nach einem der Ansprüche 1 bis 4, gekennzeichnet durch die Tatsache, dass die zu filternde Minimalfrequenz in der Grössenordnung von 1 Hertz liegt.

6. Schaltung nach einem der Ansprüche 1 bis 5, gekennzeichnet durch die Tatsache, dass die Diskriminatoreinrichtungen enthalten: eine Schwingungsverstärkerstufe hoher Verstärkung wenigstens für schwache Signale (40), die mit der Eingangsklemme (A) verbunden ist (36), eine Komparatorstufe (50), die einerseits (35) mit der Eingangsklemme (A) und andererseits mit dem Ausgang des Schwingungsverstärkers (40) verbunden ist, und eine Differenzierstufe (60), die mit dem Ausgang der Komparatorstufe (50) verbunden ist, wobei das Rechtecksignal von der dauernden Abwesenheit von Impulsen am Ausgang der Differenzierstufe ausgehend definiert ist.

7. Schaltung nach Anspruch 6, gekennzeichnet durch die Tatsache, dass die Verzögerungseinrichtungen eine monostabile, wiedertriggerbare Schaltung (80) enthalten, die mit dem Ausgang der Differenzierstufe (60) verbunden ist, wobei diese monostabile wiedertriggerbare Schaltung am Ausgang das Signal mit vermindertem Rechteck zu Beginn des neutralen Zeitintervalls vorbestimmter Länge liefert.

8. Schaltung nach einem der Ansprüche 6 und 7, gekennzeichnet durch die Tatsache, dass die Schwingungsverstärkerstufe (40) einen Zerhakkerdifferenzverstärker sehr hoher Eingangsimpedanz (41) enthält, dessen nicht-invertierender Eingang über einen Kondensator (C44) mit Masse und über einen Widerstand (R43) mit der Eingangsklemme (A, 36) verbunden ist und dessen invertierender Eingang einerseits mit der Eingangsklemme (A, 36) über einen Widerstand (R42) und andererseits mit dem Ausgang über eine bidirektionale Antisättigungs-Diodengegenkopplungsschaltung (D46, D47) verbunden ist.

9. Schaltung nach einem der Ansprüche 1 bis 8, gekennzeichnet durch die Tatsache, dass sie zwischen einen Gewichtssensorkreis (3, 2) und einen Gewichts-Analog/Digital-Wandler (4) geschaltet ist.

10. Schaltung nach Anspruch 9, gekennzeichnet durch die Tatsache, dass der Gewichts-Analog/Digital-Wandler (4) von einer Steuerlogik (5) gefolgt ist, die Speichern (6), einer Tastatur (7) und einer numerischen Anzeigeeinrichtung (8) zugeordnet ist, und dass die Logik (5) auf einen spezifischen Befehl (E) der Tastatur anspricht, indem sie von dieser eine Speicheradresseninformation empfängt und anschliessend das ermittelte neue Gewicht in diese Adresse eingibt, wobei die Differenz zwischen dem zuvor in den Speicher eingegebenen Gewicht und dem neu bestimmten Gewicht angezeigt wird.

**Claims**

1. Electronic measuring device with low-pass filtering, in particular for weighing, comprising between active input terminals (A) and output terminals (B) and earth, a system (10) of resistive elements (R12, R13) and reactive elements (C12, C14) arranged as a low-pass filtering quadripole, characterised by the fact that it comprises:

– a controlled resistance link (R15, Q16) in parallel with at least one of the resistive elements (R12),

– discriminating means (35, 36, 40, 50, 60) for supplying a signal of the square wave type following a variation in the continuous component of the signal present on the active input terminal (A), the duration of this squarewave signal increasing with the amplitude of the variation in the continuous component,

– delay means (70, 80) for defining a neutral time interval of predetermined duration, following the beginning of the square-wave signal, and

– means (20) for controlling the said controlled resistance link (R15, Q16) in order to switch it to a low resistance value at the end of the said neutral time interval and to restore it progressively to a high resistance value following the end of the said square-wave signal.

2. Device according to claim 1, characterised by the fact that the controlled resistance link comprises a field effect transistor (Q16) and that the control means (20) comprise a circuit having a double time constant (C23, R25, R26, R28, D29) able to make the transistor (Q16) conduct rapidly after the end of the neutral time interval and then to restore it to the blocked state progressively.

3. Device according to claim 2, characterised by the fact that the control means (20) comprise a circuit (21, D22, D24) connected to the input terminal (A), in order to apply to the gate of the transistor (Q16) a control conduction voltage close to the voltage present at the input terminal (A).

4. Device according to one of claims 2 and 3, characterised by the fact that the controlled resistance link (R15, Q16) and the circuit having a double time constant (C23, R25, R27) are arranged so that the variation slope of the time constant of the filtering quadripole remains lower than the minimal frequency to be filtered.

5. Device according to one of claims 1 to 4, characterised by the fact that the minimal frequency to be filtered is of the order of one Hertz.

6. Device according to one of claims 1 to 5, characterised by the fact that the discriminating means comprise a high gain oscillation amplifier stage, at least for weak signals (40), connected (36) to the input terminal (A), a comparator stage (50) connected on the one hand (35) to the input terminal (A) and on the other hand to the output of the oscillation amplifier (40) and a differentiation stage (60) connected to the output of the comparator stage (50), the said square-wave signal being defined from the lasting absence of pulses at the output of the differentiation stage.

7. Device according to claim 6, characterised by the fact that the delay means comprise a rearmable monostable circuit (80), connected (70) to the output of the differentiation stage (60), this rearmable monostable circuit supplying at the output the square-wave signal reduced at its beginning by the neutral time interval, of predetermined duration.

8. Device according to one of claims 6 and 7, characterised by the fact that the oscillation amplifier stage (40) comprises a chopper differential amplifier having a very high input impedance (41), whereof the non-inverting input is connected to earth by a capacitor (C44) and to the input terminal (A, 36) by a resistor (R43) and whereof the inverting input is connected on the one hand to the input terminal (A, 36) by a resistor (R24) and on the other hand to the output by a two-directional anti-saturation counter-feedback comprising diodes (D46, D47).

9. Device according to one of claims 1 to 8, characterised by the fact that it is connected between a weight pick-up circuit (3, 2) and an analogue-to-digital weighing convertor (4).

10. Device according to claim 9, characterised by the fact that the analogue-to-digital weighing convertor (4) is followed by control logic (5) associated with memories (6), a keyboard (7) and a digital display (8), and that the logic (5) reacts to a specific command (E) of the keyboard on receiving from the latter memorised address information, then by sending the newly determined weight to this address whilst displaying the difference between the previously memorised weight and the newly determined weight.

0112218

FIG.1

FIG.4

FIG.5

FIG.6A

FIG.6B

FIG.7

11

0112218

FIG. 2

FIG. 3